# EUROPÄISCHE PATENTANMELDUNG

(11) **EP 1 757 408 A1**
(43) Veröffentlichungstag der Anmeldung: **28.02.2007**
(21) Anmeldenummer: 06017234.3
(22) Anmeldetag: 18.08.2006
(51) Int. Cl.: B25G 1/10, B62D 1/06, B62K 21/26, H05B 3/14

(54) **Beheizbares Griffelement**

(30) Priorität: 22.08.2005 DE 202005013294 U
(71) Anmelder: PKI Preusser Kunststoff- und Industrielackierung GmbH, 49084 Osnabrück (DE); Bona & Frauenheim KG, 58313 Herdecke (DE)
(72) Erfinder: Noppe, Beate, 49124 Georgsmarienhütte (DE); Vieth, Kurt, 58640 Iserlohn (DE)
(74) Vertreter: Bünemann, Egon

(57) **Zusammenfassung**

Beheizbares Griffelement für Fahrzeuge oder sonstige außerhalb von Gebäuden von Hand zu betätigende Geräte und Maschinen mit einem Griffkörper und einer Griffummantelung wird materialkonform mit den gebräuchlichen Materialien für das Heizelement in der Weise gestaltet, daß die Griffummantelung eine Heizschicht elektrisch mit einem vorgegebenen Flächenwiderstand leitenden Materials umfaßt.

## Beschreibung

Die Erfindung betrifft ein beheizbares Griffelement für Fahrzeuge und sonstige außerhalb von Gebäuden von Hand zu betätigende Geräte und Maschinen nach dem Oberbegriff des Anspruchs 1. Bei Fahrzeugen jeglicher Art, also bei Land-, Wasser- und Luftfahrzeugen besteht insbesondere im Winter ein Bedarf an beheizbaren Griffelementen, um die Bedienung angenehmer und leichter zu gestalten und damit auch die Fahrsicherheit zu erhöhen. Ähnliche Interessen sind bei Maschinen und Geräten außerhalb beheizter Gebäude gegeben - Baumaschinen, Hebezeuge für Verladearbeiten im Freien, land- und forstwirtschaftliche Maschinen und Geräte sind mit beheizbaren Griffelementen leichter, präzisier und sicherer zu handhaben.

Bekannt ist allerdings bereits ein beheizbares Griffelement in Form eines PKW-Lenkrades, in dem unter einer Lederummantelung Widerstands-Heizgeräte verlegt und geführt sind, die aus dem Fahrzeugnetz über ein geeignetes Schalt- oder Regelgerät mit Strom versorgt werden. Die Verlegung der Widerstandsgeräte, die am und im Griffkörper mit Abstand voneinander liegen und dieserhalb wie auch zur Sicherung gegen Verschleiß und Ermüdungsbruch festliegen müssen, gestaltet sich umständlich und führt zu hohem Arbeitsaufwand und entsprechenden Herstellungskosten. Widerstandsdrähte sind aber auch im Wärmedehnungsverhalten etwa gegenüber einem Kunststoff-Griffkörper schlecht passend, während sie gegenüber einem Metall-Griffkörper eine komplizierte Isolierung erfordern würden.

Aufgabe der Erfindung ist es demgegenüber, ein beheizbares Griffelement zu schaffen, das zumindest ein Heizelement aufweist, welches materialkonform mit den gebräuchlichen Materialien gestaltet werden kann, solide in das Griffelement zu integrieren ist und ohne unangemessenen Arbeits- und Kostenaufwand erstellt werden kann.

Gemäß der Erfindung wird diese Aufgabe von einem beheizbaren Griffelement nach dem Oberbegriff des Anspruchs 1 ausgehend mit den kennzeichnenden Merkmalen des Anspruchs 1 gelöst. Eine Heizschicht mit einem vorgegebenen Flächenwiderstand elektrisch leidenden Materials läßt sich in verschiedener Weise solide, einfach und dauerhaft in ein Griffelement einarbeiten. Eine solche Schicht läßt sich insgesamt einstückig mit dem Griffelement verbinden - anders als nach Art von Näh- oder Polsterarbeiten eingezogene Widerstandsdrähte - und liefert dabei sowohl die Voraussetzung für Robustheit wie auch für ein störungsfreies, solides Griffgefühl.

Die Heizschicht kann zwar grundsätzlich in einem sehr dünnen metallischen Belag bestehen, der auf den Griffkörper oder (wenn der Griffkörper aus Metall besteht) auf eine darüber aufgebrachte Isolierschicht aufgedampft oder galvanisch aufgebracht sein könnte. Hier gilt es allerdings, für einen starren Untergrund als Basis für eine dünne metallische Schicht zu sorgen. Überdies sind bei dünnen metallischen Schichten oft Haftungsschwierigkeiten zu berücksichtigen.

Die Heizschicht kann grundsätzlich auch in Form einer Widerstandsfolie erstellt werden, die um den Griffkörper herumgeformt oder aber als Folienband um den Griffkörper gewickelt wird.

Eine im allgemeinen belastbare und auch bei einem Griffkörper mit einer gewissen Nachgiebigkeit wie etwa einem Griffkörper aus Kunststoff gut einsetzbare Heizschicht besteht aus einer pastös oder flüssig zu verarbeitenden aushärtbaren Masse, in welche elektrisch leitende Partikel eingelagert sind. Eine solche aushärtbare Masse kann auf der Basis eines thermoplastischen Kunststoffes vorgesehen werden, der im erweichten Zustand appliziert wird. Es besteht aber auch die Möglichkeit , bei Raumtemperaturen mit einer Masse aus Kunststoff-Dispersion zu arbeiten, bei der Wasser oder ein chemisches Lösungsmittel entweicht und eine feste Schicht zurückläßt. Grundsätzlich sind auch duoplastische Materialien wie durch Hitze aushärtbare Harze oder Zwei-Komponenten-Harze als aushärtbare Masse vorzusehen.

In jedem Fall liefert eine solche Masse nur eine Matrix für die eingelagerten elektrisch leidenden Partikel, die durch die Masse nicht voneinander, sondern allenfalls nach außen isoliert sein dürfen, vielmehr einander kontaktieren sollen. Als elektrisch leitende Partikel kommen grundsätzlich auch Halbleiterpartikel oder Kohlepartikel in Betracht. Vorzugsweise werden aber Metallpartikel vorgebbarer Körnung bis hin zur pulverigen Feinkörnung vorgesehen. Dabei kommen insbesondere Kupfer und Silber in Betracht, die neben der guten elektrischen Leitfähigkeit auch chemische Beständigkeit, insbesondere hinreichenden Anlaufschutz und Korrosionsfestigkeit aufweisen.

Eine solche aushärtbare Masse mit eingelagerten elektrisch leitenden Partikeln ist dann bei pastöser oder flüssiger Verarbeitung einfach auf einen Griffkörper aufzubringen, wobei ein metallischer Griffkörper gegenüber der Heizschicht durch eine zumindest dünne Isolierschicht, etwa einen Lack oder eine sonstige aushärtbare Masse galvanisch zu trennen ist. Diese aushärtbare Masse kann dann im Sinne homogener Strukturen mit gleichförmiger Wärmedehnung eng an die aushärtbare Masse der Heizschicht angepaßt sein. Bei Griffkörpern aus Kunststoff, etwa dem bei Lenkrädern gebräuchlichen Polyhurethan, erübrigen sich Isoliermaßnahmen. Die Heizschicht ist also spielfrei und fest mit dem Griffkörper zu verbinden.

Im allgemeinen wird eine weitere Griffummantelung, etwa ein Lederband oder eine Lederschale noch auf die Heizschicht aufgebracht werden, um haptischen und optischen Ansprüchen zu genügen. Ebenso kommt für robuste Einsätze eine Gummiummantelung in Betracht. Von besonderem Interesse sind allerdings dekorative Griffummantelungen aus Kunststoff, die gestalterisch eine Holz- oder Lederstruktur oder auch eine Metallstruktur und vieles andere imitieren können und dabei ebenso leicht, fest, spielfrei und dauerhaft aufzubringen sind wie zuvor die Heizschicht. Die Abstimmung von Kunststoffmaterialien zwischen der Heizschicht und der Griffummantelung erlaubt es zudem, eine gute Haftung und ein übereinstimmendes Wärmedehnungsverhalten zwischen den Schichten sicherzustellen.

Im einfachsten Fall kann allerdings auch auf eine weitere Griffummantelung über der Heizschicht verzichtet werden, so daß die Heizschicht die Griffummantelung selbst darstellt, wenn die angelegten Spannungen, wie dies bei Fahrzeugen regelmäßig der Fall ist, keinen Berührungsschutz verlangen.

Eine Heizschicht der hier betrachteten Art wird für die Durchleitung eines Stroms, der durch die Stromwärmeverluste für eine Aufheizung sorgen soll, zumindest an einer Stelle mit einer Stromeinleitung zu verbinden sein, selbst wenn der Gegenanschluß, wie es verschiedentlich bei Fahrzeugen vorgesehen wird, über metallische Strukturteile von der Karosserie her "an Masse" anzuschließen ist. Bei einem Lenkrad, einem Schalthebel oder bei sonstigen Bedienelementen sind zwei einander beabstandete Elektroden zur Stromleitung in die Heizschicht vorzusehen, die ihrerseits in üblicher Weise mit Drähten, Kabeln oder dgl. in Verbindung stehen, um eine Stromversorgung zu ermöglichen. Die Stromversorgung ist dabei in bekannter Weise mit Schalt- oder Steuermitteln auszustatten, um zeitgeschaltet oder über einen Thermofühler am Griffelement die Beheizung zu dosieren bzw. zu regeln.

Die Elektroden können dabei der Heizschicht unterlegte, vorzugsweise metallische Bänder oder Stäbe sein, sie können auch in die Heizschicht eingelagert sein. Bei einer Heizschicht mit einen vorgesehenen Flächenwiderstand ist es von Vorteil, den Strom breit verteilt einzuleiten und punktuelle Spitzenbelastungen zu vermeiden.

In dieser Hinsicht kann beispielsweise ein Lenkrad, das auf dem gesamten Umfang mit einer Heizschicht versehen ist, an zwei etwa einander gegenüberliegenden Bereichen mit ringförmigen Elektroden versehen sein, die die Heizschicht von unten her kontaktieren und einen Stromfluß zur anderen Elektrode hin über beide Hälften des Lenkradringes hinweg erzeugen. In Umfangsrichtung kann ein solches Lenkrad aber auch mit einer Mehrzahl abwechselnd anzuschließender Elektroden in Umfangsrichtung versehen werden, um entsprechend jeweils in Teilabschnitten des Lenkrads kürzere Stromflußlängen mit entsprechend geringerem Widerstand zu erzielen.

Ähnlich kann beispielsweise bei einem zylindrischen oder prismatischen Griffelement mit einer axialen Ausrichtung vorgesehen werden, daß ein Heizelement, welches die zylindrische oder prismatische Griffkörperform umschießt, mit zwei endseitige Ring-Elektroden in axialem Abstand elektrisch angeschlossen wird. Auch hier können Zwischenelektroden wechselnder Polarität die Abstände und damit den Heizwiderstand verringern. Grundsätzlich kann aber auch bei einer zumindest grobhin prismatischen Griffausbildung eine Trennung der Heizschicht in Längsrichtung vorgegeben werden, wobei längs einer Trennlinie nebeneinander zwei gegeneinander isolierte Elektroden vorgesehen sind, die einen Stromfluß in Umfangsrichtung erzwingen.

Es ergeben sich also viele Gestaltungsmöglichkeiten, die auch für die elektrische Auslegung der Heizschicht auf einen vorgesehenen Gesamtwiderstand hin nutzbar sind. Der vorgegebene Gesamtwiderstand wie auch der vorgegebene Flächenwiderstand der Heizschicht sind zunächst einmal auf das elektrische System mit der zur Verfügung stehenden Spannung hin auszulegen. Bei relativ niederen Fahrzeugspannungen in einem PKW sind geringere Werte des Gesamtwiderstandes zu vorgegebener Heizleistung einzusetzen. Bei einer Batteriespannung von 12 Volt bei einem PKW-Bordnetz sind Werte für den Gesamtwiderstand der Heizschicht etwa von 1 bis 10 Ohm für eine geeignete Heizleistung und für kurze Aufheizzeiten ansetzbar. Aus den Werten für den Gesamtwiderstand ergibt sich ein vorgegebener Flächenwiderstand der Heizschicht anhand der Längen- und Querschnitte für den Stromfluß in der Heizschicht.

## Patentansprüche

1. Beheizbares Griffelement für Fahrzeuge oder sonstige außerhalb von Gebäuden von Hand zu betätigende Geräte und Maschinen mit einem Griffkörper und einer Griffummantelung, **dadurch gekennzeichnet, daß** die Griffummantelung eine Heizschicht elektrisch mit einem vorgegebenen Flächenwiderstand leitenden Materials umfaßt.

2. Griffelement nach Anspruch 1, **dadurch gekennzeichnet, daß** die Heizschicht aus einer pastös oder flüssig zu verarbeitenden, aushärtbaren Masse besteht, in die elektrisch leitende Partikel eingelagert sind.

3. Griffelement nach Anspruch 2, **dadurch gekennzeichnet, daß** die Heizschicht Metallpulver enthält.

4. Griffelement nach Anspruch 1, **dadurch gekennzeichnet, daß** die Heizschicht eine Widerstandsfolie umfaßt.

5. Griffelement nach Anspruch 1, **dadurch gekennzeichnet, daß** die Heizschicht aus einem dünnen metallischen Belag elektrisch leitenden Materials besteht.

6. Griffelement nach einem der Ansprüche 1 bis 5, **dadurch gekennzeichnet, daß** die Heizschicht mit einer isolierenden Mantelschicht abgedeckt ist.

7. Griffelement nach einem der Ansprüche 1 bis 6, **dadurch gekennzeichnet, daß** die Heizschicht mit zumindest zwei voneinander beabstandeten Elektroden verbunden ist.
